# EUROPÄISCHE PATENTSCHRIFT

(11) **EP 2 444 616 B1**
(45) Veröffentlichungstag und Bekanntmachung des Hinweises auf die Patenterteilung: **01.07.2015**
(21) Anmeldenummer: 11007365.7
(22) Anmeldetag: 09.09.2011
(51) Int. Cl.: F01N 13/14, F01N 13/10, F16L 9/14, F16L 59/08

(54) **Heissgasführendes Bauteil**
Hot gas conveying component
Composant transportant du gaz chaud

(30) Priorität: 20.10.2010 DE 102010048975
(43) Veröffentlichungstag der Anmeldung: 25.04.2012
(73) Patentinhaber: ISOLITE GmbH, 67063 Ludwigshafen (DE)
(72) Erfinder: Kroll, Matthias, 67273 Dackenheim (DE); Buchsteiner, Armin, 74889 Sinsheim (DE)
(74) Vertreter: Grünecker Patent- und Rechtsanwälte PartG mbB

(56) Entgegenhaltungen:
- DE-A1- 10 254 715
- DE-A1- 19 536 124
- US-A- 4 695 516
- US-A1- 2004 033 313

## Beschreibung

Die Erfindung bezieht sich auf ein heißgasführendes Bauteil, insbesondere für eine Abgasanlage eines Verbrennungsmotors.

Isolierungen für heißgasführende Bauteile, insbesondere z.B. für Abgaskrümmer eines Verbrennungsmotors sind in den vielfältigsten Konstruktionen im Einsatz. So zeigt beispielsweise die DE 10 2008 051 278 eine Abgasanlage für Brennkraftmaschinen, insbesondere einen Abgaskrümmer, der durch einen mittels einer Vakuumpumpe evakuierbaren, isolierenden Luftraum für eine thermische Isolation einsetzt.

Die DE 195 36 124 A1 offenbart einen Abgaskrümmer für eine Abgasanlage eines Verbrennungsmotors mit einem die Innenseite des Krümmers bildenden Rohr mit mindestens einem Anschlussstück zur Verbindung mit mindestens einem Brennraum des Verbrennungsmotors und mit einer um das Rohr herum angeordneten Wärmedämmschicht.

Auch Isolationsformkörper, die aus Faservliesmaterial gepresst wurden, sind im Einsatz.

Isolationen, insbesondere im Abgassystem von Verbrennungsmotoren für Kraftfahrzeuge, haben verschiedene Aufgaben zu erfüllen. Zum einen sollten sie die umgebenden Bauteile gegen Wärmestrahlung schützen, und zum anderen sollten sie sicherstellen, dass nachfolgende Bauteile, wie beispielsweise Abgasturbolader oder Katalysatoren beim Motorstart schnell auf ihre Betriebstemperatur aufgeheizt werden.

Der Erfindung liegt die Aufgabe zugrunde, eine verbesserte, thermisch wirksame Isolation bereitzustellen. Die Aufgabe wird durch die Merkmale des Anspruchs 1 gelöst.

Die Erfindung stellt einen Isolierformkörper für ein heißgasführendes Bauteil eines Verbrennungsmotors bereit, mit einer Isoliermatte, die durch ein Bindemittel versetzt ist, wobei dem Bindemittel Farbpigmente zugesetzt sind, wobei die zugesetzten Farbpigmente wärmereflektierende und/oder wärmeabsorbierende Farbpigmente sind; wobei die wärmeabsorbierenden Farbpigmente schwarze Farbpigmente des Typs Black 30C965 umfassen, wobei die wärmereflektierenden Farbpigmente gelbe Farbpigmente des Typs Yellow 193® umfassen.

Die Isoliermatte kann eine Fasermatte aus mineralischen Fasern, wie Glas- und/oder Silikat- und/oder Keramikfasern umfassen. Die Fasermatte kann ein Faservlies oder ein Fasergewebe umfassen. Die Farbpigmente können sich auf der Innen- und/oder Außenseite des Isolierformkörpers befinden.

Die Erfindung offenbart ferner ein heißgasführendes Bauteil, insbesondere für eine Abgasanlage eines Verbrennungsmotors, mit einer am Bauteil angeordneten Isolierung, wobei die Isolierung als Isolierformkörper wie er oben beschrieben ist vorliegt. Die Erfindung offenbart ferner ein Verfahren zum Herstellen eines Isolierformkörpers wie er oben beschrieben ist, wobei ein Zuschnitt einer Fasermatte mit einem mit den Farbpigmenten versetzten Bindemittel versehen und durch Heißpressen verformt wird.

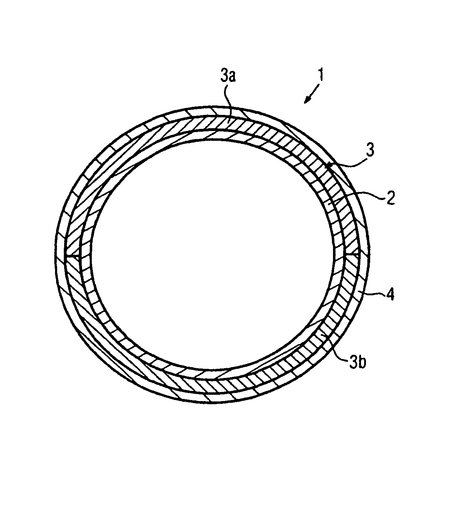

Ausführungsbeispiele der Erfindung werden nachfolgend anhand der einzigen Zeichnung näher erläutert, die einen Querschnitt durch ein erfindungsgemäßes heißgasführendes Bauteil zeigt.

Der Figur ist ein heißgasführendes Bauteil 1 in Form eines Rohres dargestellt, das beispielsweise Teil einer Abgasanlage eines Verbrennungsmotors, insbesondere ein Abgaskrümmer (Abgastemperaturen zwischen 400°C und 1600°C) sein kann. Das Bauteil 1 enthält ein Innenrohr 2 aus herkömmlichem Material, beispielsweise aus einem Metallguss oder aus einem Metallblech oder dgl.. An der Außenseite des Innenrohres 2 ist eine Isolierung 3 aufgebracht, die nach außen hin von einer Hülle 4 abgedeckt sein kann. Die Isolierung 3 ist im dargestellten Ausführungsbeispiel aus zwei Halbschalen 3a und 3b zusammengesetzt, die beide als Isoliermatten bzw. bevorzugt, da besonders wirksam, als Isolierformkörper ausgebildet sind.

Der Isolierformkörper wird jeweils aus einem Zuschnitt einer Isoliermatte hergestellt, die mit Bindemittel versetzt und durch Heißpressen in die gewünschte Form gebracht wurde.

Als Isoliermatte finden üblicherweise Faservliese aus mineralischen Fasern, wie beispielsweise Glasfasern oder Silikatfasern oder keramische Fasern Verwendung. Für die Erfindung können jedoch auch Fasergewebe aus diesen Fasern eingesetzt werden. Be-sonders bevorzugt wird eine Standardmatte in Form einer Silikatfasermatte Sinamat® mit 8 mm Dicke und 960 g/m² eingesetzt. Auch Powermat® mit 8 mm bzw. 12 mm Dicke und 900 g/m² bzw. 1200 g/m² (nicht vorgeschrumpft) können eingesetzt werden. Ein weiteres, bevorzugtes Material ist eine Silikatfasergewebematte (gezwirnt) Hakoterm® 1200 HG 1350.

Als Bindemittel wird üblicherweise in Wasser aufgeschlämmtes Bentoit oder eine andere geeignete Tonerde eingesetzt.

Erfindungsgemäß enthält die Isolierung Pigmente oder Partikel. Die Pigmente können durch Streichen auf der Isoliermatte oder in sonstiger Weise aufgebracht werden. Bevorzugt werden die Pigmente jedoch dem Bindemittel zugemischt und zusammen mit dem im Wasser aufgeschlämmten Bindemittel auf die Fasermatten ein- oder beidseitig aufgebracht.

Die Pigmente oder Partikel sind bevorzugt Farbpigmente, die auch für Farben verwendet werden können. Diese können für den speziellen Verwendungszweck gezielt ausgesucht werden. Da Spektraleigenschaften von Farbpigmenten bekannt sind, können diese speziell nach ihren Spektraleigenschaften, insbesondere im Infrarotbereich ausgesucht werden. Wichtig sind insbesondere die reflektierenden und die absorbierenden Eigenschaften.

So können beispielsweise schwarze Farbpigmente dort eingesetzt werden, wo es um einen Temperaturausgleich oder die Aufrechterhalten einer bestimmten Temperatur geht. Reflektierende Farbpigmente, wie beispielsweise in gelb oder weiß, können dort eingesetzt werden, wo es darum geht, die Wärme zurück zum Wärmeträger zu reflektieren. Beide bewirken jedoch, dass beispielsweise Abgas nach einem Motorstart schnell auf die erforderliche Betriebstemperatur für nachfolgende Bauteile (wie beispielsweise einen Turbolader oder ein Katalysator) gebracht werden kann.

Als schwarzes, wärmeabsorbierendes Pigment hat sich insbesondere ein schwarzer Kupferchromitspinell (copper chromite black spinell), z.B. "Black 30C965" der Firma "The Shepherd Color Company" als brauchbar herausgestellt. Geeignet sind auch BK0030C965; C.I. Pigment Black 28; C.I. Constituation #77428; CPMA #13-38-9.

Als wärmereflektierendes Pigment hat sich "YELLOW 193®" der gleichen Firma als geeignet erwiesen. Dieses gelbe Farbpigment enthält ein Polier-Rutil auf Chrom/Antimon/Titan-Basis (chrome antimony titanium buff rutile).

Andere mineralische Pigmente sind ebenfalls einsetzbar.

Zur Herstellung werden die Pigmente bevorzugt mit dem Bindemittel ein- oder beidseitig in vorbestimmten Mengenverhältnissen gemischt, wobei sich Mischungsverhältnisse von drei Teilen Bindemittel (Tonerde/Bentonit und Wasser) mit einem Teil Pigment bewährt hat.

Nach dem Mischen wurde das pigmentversetzte Bindemittel auf die Fasermatte aufgebracht und in einer beheizten Gesenkpresse zum bevorzugt selbsttragenden Isolierkörper geformt. Anschließend werden die Formkörper am Bauteil befestigt, wobei die Farbpigmente an der Außen- oder der Innenseite zu liegen kommen.

In Abwandlung des beschriebenen und gezeichneten Ausführungsbeispiels können die Pigmente in der Art eines Farbanstriches auf die Isolationsmatten aufgebracht werden oder in anderer Weise in die Isolationsmatte direkt eingebracht werden. Außer für Abgaskrümmer eignet sich die Erfindung auch für andere heißgasführende Bauteile.

## Patentansprüche

1. Isolierformkörper (3) für ein heißgasführendes Bauteil (1) eines Verbrennungsmotors, mit einer Isoliermatte, die durch ein Bindemittel versetzt ist, wobei dem Bindemittel Farbpigmente zugesetzt sind, wobei die zugesetzten Farbpigmente wärmereflektierende und/oder wärmeabsorbierende Farbpigmente sind; **dadurch gekennzeichnet, dass** die wärmeabsorbierenden Farbpigmente schwarze Farbpigmente des Typs Black 30C965 umfassen, wobei die wärmereflektierenden Farbpigmente gelbe Farbpigmente des Typs Yellow 193 umfassen.

2. Isolierformkörper (3) gemäß Anspruch 1, wobei die Isoliermatte eine Fasermatte aus mineralischen Fasern, wie Glas- und/oder Silikat- und/oder Keramikfasern umfasst.

3. Isolierformkörper (3) gemäß Anspruch 2, wobei die Fasermatte ein Faservlies oder ein Fasergewebe umfasst.

4. Isolierformkörper (3) gemäß einem Ansprüche 1 bis 3, wobei die Farbpigmente sich auf der Innen- und/oder Außenseite des Isolierformkörpers befinden.

5. Heißgasführendes Bauteil (1), insbesondere für eine Abgasanlage eines Verbrennungsmotors, mit einer am Bauteil (1) angeordneten Isolierung, wobei die Isolierung als Isolierformkörper (3) gemäß einem der Ansprüche 1 bis 4 vorliegt.

6. Verfahren zum Herstellen eines Isolierformkörpers nach einem der Ansprüche 2 bis 4, wobei ein Zuschnitt einer Fasermatte mit einem mit den Farbpigmenten versetzten Bindemittel versehen und durch Heißpressen verformt wird.

## Claims

1. Insulating molded body (3) for a hot gas conducting component (1) of an internal combustion engine, having an insulating mat which is mixed with a binder, wherein color pigments are added to the binder, wherein the added color pigments are heat-reflecting and/or heat-absorbing color pigments; **characterized in that**
the heat-absorbing color pigments comprise black color pigments which are of the type Black 30C965 and the heat-reflecting color pigments comprise yellow color pigments which are of the type YELLOW 193®.

2. Insulating molded body (3) according to claim 1, wherein the insulating mat comprises a fiber mat of mineral fibers, such as glass and/or silicate and/or ceramic fibers.

3. Insulating molded body (3) according to claim 2, wherein the fiber mat comprises a nonwoven fibrous tissue or a woven fibrous tissue.

4. Insulating molded body (3) according to one of claims 1 - 3, wherein the color pigments are located on the inner and/or outer surface of the insulating molded body.

5. Hot gas conducting component (1), in particular for an exhaust system of an internal combustion engine, with an insulation (3) arranged at the component (1), wherein the insulation is present as an insulating molded body (3) according to one of claims 1 - 4.

6. Method of manufacturing an insulating molded body according to one of claims 2 - 4, wherein a blank of a fiber mat is provided with a binder mixed with the color pigments and reshaped by hot pressing.

## Revendications

1. Corps de forme isolant (3) pour une pièce de construction mécanique (1) véhiculant des gaz chauds, d'un moteur à combustion interne, comprenant une nappe isolante, qui est mélangée à un liant, des pigments de couleur étant additionnés au liant, et les pigments de couleur additionnés étant des pigments de couleur réfléchissant la chaleur et/ou absorbant la chaleur,
**caractérisé en ce que**
les pigments de couleur absorbant la chaleur comprennent des pigments de couleur noirs du type Black 30C965, les pigments de couleur réfléchissant la chaleur comprenant des pigments de couleur jaunes du type Yellow 193.

2. Corps de forme isolant (3) selon la revendication 1, dans lequel la nappe isolante est une nappe de fibres en fibres minérales, comme des fibres de verre et/ou de silicate et/ou de céramique.

3. Corps de forme isolant (3) selon la revendication 2, dans lequel la nappe de fibres comprend un non tissé de fibres ou un tissu de fibres.

4. Corps de forme isolant (3) selon l'une des revendications 1 à 3, dans lequel les pigments de couleur se trouvent sur le côté intérieur et/ou le côté extérieur du corps de forme isolant.

5. Pièce de construction mécanique (1) véhiculant des gaz chauds, notamment destinée à une installation de gaz d'échappement d'un moteur à combustion interne, comprenant une isolation agencée sur la pièce de construction mécanique (1), l'isolation se présentant en tant que corps de forme isolant (3) selon l'une des revendications 1 à 4.

6. Procédé de fabrication d'un corps de forme isolant selon l'une des revendications 2 à 4, d'après lequel on dote un flan découpé d'une nappe de fibres, d'un liant mélangé aux pigments de couleur, et on le met en forme par pressage à chaud.
